# EUROPEAN PATENT APPLICATION

(11) **EP 1 223 752 A2**
(43) Date of publication of application: **17.07.2002**
(21) Application number: 01830736.3
(22) Date of filing: 30.11.2001
(51) Int. Cl.: H04N 5/63

(54) **Automatic mains switch device**

(30) Priority: 04.12.2000 IT RM20000639
(71) Applicant: Elettronica G. & C. s.n.c. di Cellanetti Valter & C., 00019 Tivoli (RM) (IT)
(72) Inventor: Giancaspare, Michele, 00019 Tivoli (Roma) (IT)

(57) **Abstract**

An automatic mains switch device (1) usable in combination with electrical appliances controlled through a remote control (5), include: a sensor (24) that the device uses to monitor the presence of load on the electric power line in manner to disconnect the load when it is no more in use, a switching unit used to disconnect the load from the mains power line and a logical control unit (23) used to control the operations of the automatic mains switch device.

## Description

The present invention refers to an automatic mains switch device used to disconnect a load from the electrical mains line, particularly useful in association with electrical appliances controlled by remote control units like, for example, television sets.

Known solutions exist based on time-controlled switches; they disconnect the electric load from the mains after a predetermined times. Such switches, however, will require manual presetting of the activation and deactivation times, thus resulting not enough flexible in their use.

Devices like hi-fi stereo units or television sets are often equipped with an integrated time-operated switch that will put these sets to stand-by mode after a pre-determined period of time. Even where these integrated devices exist, however, they will put the appliance set to stand-by mode and they will not electrically disconnect the electrical appliance from the mains line.

The above solution is not recommended for many reasons. For example a television set which is switched off and kept for a long time in stand-by condition, could be potentially dangerous because it will - in any case - be subject to voltage drifts and spikes that may, occasionally, occur on the mains line.

It could even happen that such voltage drifts or spikes could cause equipment faults that could, in some cases, start fire in the television sets. It should also be noted that any device, even when in stand-by mode, will generate electromagnetic fields that are considered to be potentially dangerous for health.

Known solutions exist based on remotely controlled switches that can be set on and off at any time by the user. Such switches, however, will imply, as a drawback, the need for specific remote control units which will, in most case, be not the same as those used for remotely controlling the appliance set we want to switch on and off.

Moreover they must be manually operated and their action do not depend on the presence or absence of active electric loads on the controlled power line.

Aim of the present invention is to provide a solution to solve the problems described above by means of an Automatic mains switch device which include:
- A switching unit able to electrically disconnect a load from the electric mains line;
- A receiving unit able to receive and decode remote control signals;
- A logical control unit used to control the Automatic mains switch device;
- A sensor unit, connected to the logical control unit, able to generate a first electrical control signal occurring when the presence of an active electric load is detected and a second electric control signal occurring when no active electric load is detected.

The main advantage of the Automatic mains switch device, subject of this invention, consists in the complete and automatic disconnection of an electric load from the mains power line as soon as inactivity of this load is detected.

This will be particularly useful when, for example, the device it is used in conjunction with units like television sets and particularly when these units are used in bedrooms. It is almost usual, in these cases, that the television set is switched off and put into stand-by mode by means of a remote control unit or, even, that it is left running while the user falls asleep.

In both cases the automatic mains switch device subject of this invention will automatically disconnect the television set from the electric mains line, thus avoiding every potential risk and minimizing the generation of electromagnetic fields.

A second advantage deriving from the first one, is that, being the television set completely disconnected from the mains power line, it will be protected from any possible voltage surge and, consequently, also by the possible risk of fire while in stand-by condition.

A third advantage of the automatic mains switch device as from this invention, is that it may be remotely controlled by the same remote control unit normally used to remotely control the electric appliance powered through the device.

An additional advantage deriving from the use of the device as from this invention, is the energy saving resulting from the complete disconnection of the electric load from the mains line. It should be noted, as an example, that the power consumption of a television set in stand-by mode is, normally, between 5 and 20 W/h, while the automatic mains switch device as from this invention, will be less then 1 W/h when it disconnected load from the mains line.

Additional advantages, characteristics and applications of the automatic mains switch device as from this invention will clearly result from the following detailed description of the invention, presented in one its preferred forms of implementation, and shown, as possible examples and not restrictions, by means of the following figures and drawings, where:
- Figure 1 shows an example of the device subject of the present invention;
- Figure 2 shows a block diagram of the device subject of the present invention;
- Figure 3 shows a schematic diagram of the device subject of the present invention.

In the following description reference will be made, for sake of simplicity, to the example where the electric load powered through the device subject of this invention is a television set. It is clearly stated, however, that the proposed example is, in no way, limiting the application of the device to the use in conjunction with a television set as the operation, use and advantages of the device subject of this invention are not anyhow limited by the specific nature of the load.

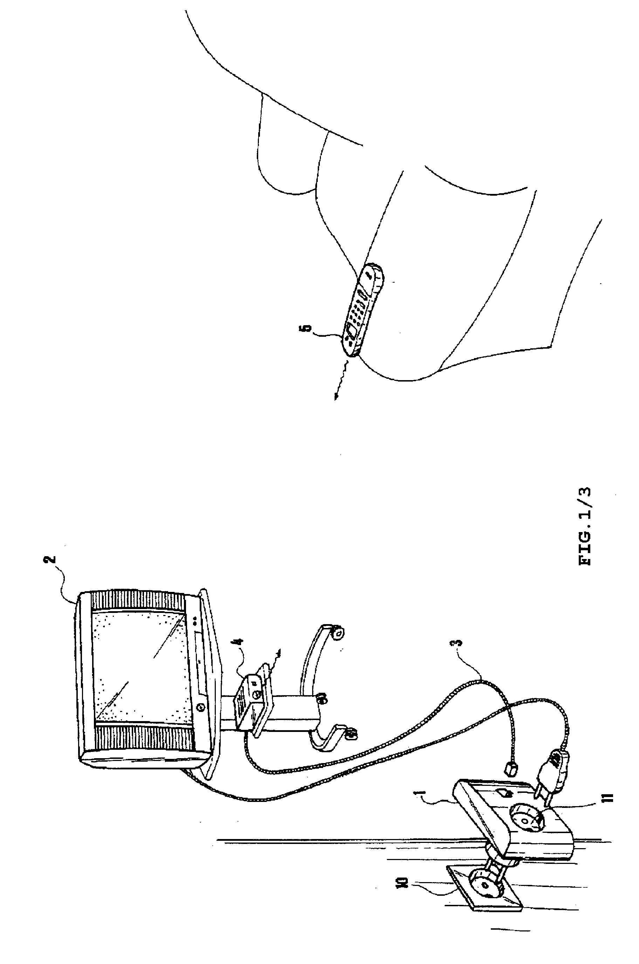

With reference to Figure 1, an example of use of the automatic mains switch device subject of this invention and referred to as device 1. In more details, device 1 results to be connected to a first mains power socket 10. A load 2, in the specific example a television set, is connected to a second mains socket 11, available in device 1. A receiver unit 4 is also connected to device 1, e.g. by means of the electric wire 3; the receiver unit 4 will be put near the television set 2, so that it could receive the signals transmitted from a remote control unit 5, e.g. an infrared remote control unit. As a possible alternative solution, the receiver unit 4 may be connected to device 1 by different means other than the electric wire 3 like, for example, by means of wireless solutions based on radio frequency transceivers or any other means or systems known and suitable for this purposes. Receiver unit 4 receives the signals coming from the television set remote control unit and transmits these signals, to device 1 that, consequently, could operate in a way that is fully transparent to the TV set user, meaning that the same user will not need, for the operation of device 1, any additional remote control unit other than the one normally used for the television set powered through device 1.

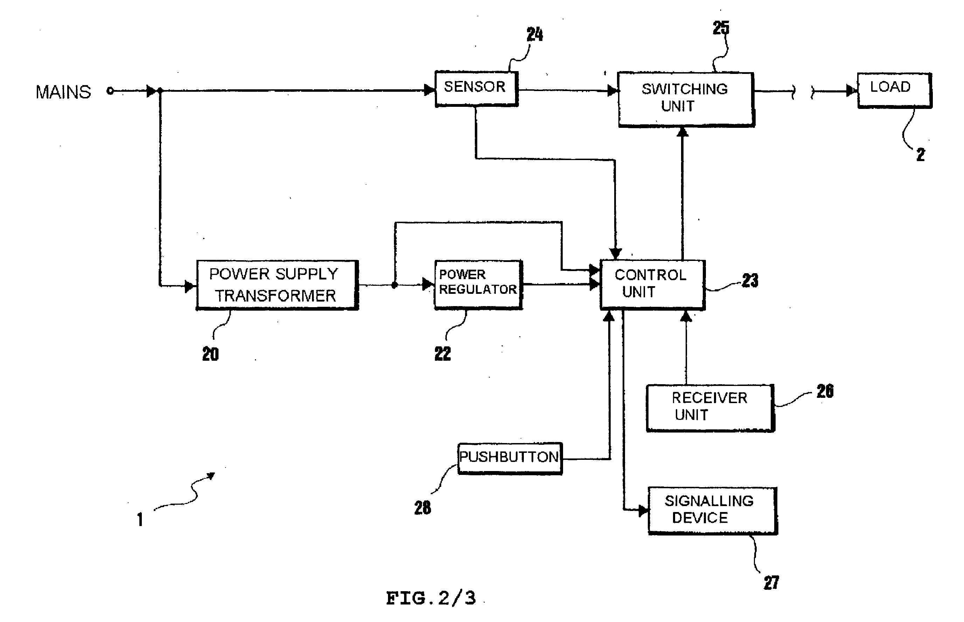

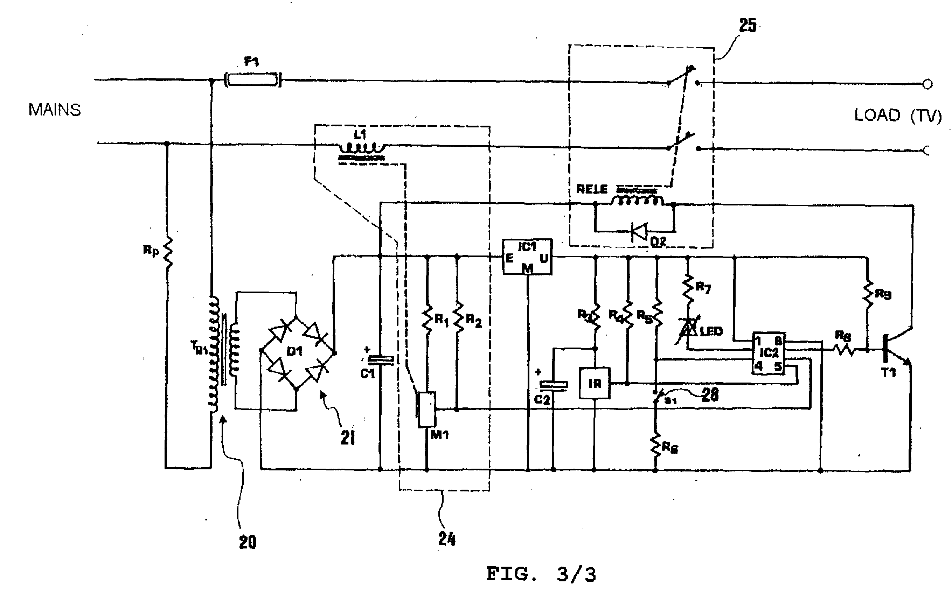

With reference to Figures 2 and 3, the automatic mains switch device 1, subject of this invention, is connected by means of a transformer 20, to the electric mains line from which it takes the power required for its operation. Transformer 20 has the main purpose of reducing the mains voltage and, in addition of providing the necessary insulation function required for a safe use of the device.

A rectifier bridge 21, here shown used as full-wave rectifier, is connected to the low voltage output of transformer 20. A power regulator integrated circuit 22 is connected to the output of rectifier bridge 21 and is used to regulate the supply voltage of device 1. The power regulator integrated circuit 22 which, as an example, could be a type 78L05 integrated circuit, is shown as component IC1 in figure 3.

A programmable logical control unit 23 is used to control the operation of device 1. The above control unit 23 is based on a microprocessor device that, in fig. 3 is shown as IC2 and that, as a possible example, may be a type PIC12C508A integrated circuit. Logical control unit 23 is a programmable I.C. and, consequently, it will operate in accordance with the logic procedures previously stored in its internal program memory.

A sensor unit 24 is used to detect the possible presence of an active electric load 2 connected to device 1. Such sensor unit 24, will include an electronic device M1, based on the well known "Hall effect", that will be used in conjunction with the inductive element L1, to detect possible variations of the magnetic field produced by the electric current flowing through the wires used to power the electrical load 2. Such electronic M1 device is shown in figure 3 as M1 and, as a possible example, may be a type DN6838.Hall's effect sensor integrated circuit.

Sensor unit 24 will output a first electrical signal when the presence of an active load is detected and will output a second electrical signal when no active load is detected.

The logical control unit 23 will receive both signals generated by sensor unit 24 and will react according to its current logical status and according to the logical procedure previously stored in its program memory and, consequently, it could activate or deactivate the switching unit 25 for example electromechanical relay that will connect or disconnect the electric load 2 from the mains power line.

The logical control unit 23 will also receive the signal generated from the receiver unit 4. Such receiver unit 4 includes a sensor receiver integrated circuit (also shown as IR in figure 3 that, as an example, could be a type SFH505 integrated circuit) able to detect the infrared control signals generated by most of the remote control units currently used for remote control of television sets and similar electrical appliances.

The receiver unit 4 will detect, receive any received infrared signal and will generate the corresponding signals to be sent to the logical control unit 23. This latter unit, depending upon the type of signal received from the remote control by means of the receiver unit 4, will react according to its current logical status as explained below in more details.

The same receiver unit 4 will incorporate a visual signalling device 27 like, for example, a Light Emitting Diode, that will be used to notify the user, by means of predetermined lighting sequences, about the current status of the logical control unit 23. In conjunction or as an alternative of the visual signalling device, an acoustic device like, for example a buzzer, could be used. The activation of the pushbutton switch 28 will generate a logical signal that, once received by the logical control unit 23 will cause the latter to execute a forced disconnection procedure that will be described below in more details.

The operation of the device subject of this invention is controlled by means of logical programs which are stored into the program memory of the logical control unit 23 and, more specifically, into the program memory of the integrated circuit IC2. Different program sequences which may cause the connection or the disconnection of the electric load 2 from the mains power line will be activated in the logical control unit 23 in accordance with the signals received by the same unit 23 and with its current status.

More specifically the operating program for the management automatic mains switch device according to present invention, envisages the following function and/ or procedures.

### Activation

The device 1 is automatically put into a "wait" status after it is initially powered.

After having plugged the electric load (e.g. television set) into the power outlet of device 1, the activation of a designated key on the remote control unit will be detected by means of receiver unit 4 and, consequently, the switch unit 25 will be activated thus connecting the electric load 2 to the mains power line.

The code of the key used to start the device activation process will be pre-stored in the microprocessor memory together with most of the codes used in the commonly used remote control units.

In order to make the application of the invention even more flexible and easy to use, a self-learning procedure will be implemented in the device logical control unit 23, that will enable the device itself to recognize and store any possible code which may be generated by any type of remote control unit.

Undesired activations of the device subject of this invention will be avoided by appropriately setting a time threshold (e.g. 2 seconds) required for the activation key to be active, before it is recognized as an activation command.

### Deactivation

Sensor unit 24 will be able to detect, as previously explained, when the electric load has been turned off, i.e. when the television set has been turned off by using its remote control unit or any other means. In this case the sensor unit 24 will send an appropriate signal to the logical control unit 23 which will execute the logic program that will disconnect the load 2 from mains power line. The execution of this program will cause, after a pre-determined delay, that the switching unit 25 will be deactivated as to disconnect the electric load 2 from mains power line. The visual signalling devices provided as part of the automatic mains switch device will be activated during the delay period, to warn the user that the deactivation phase has been started.

### Automatic deactivation

Automatic deactivation will be started if the pushbutton 28 is shortly activated by the user. In this case, after a pre-determined delay, e.g. 60 minutes, the logical control unit 23 will activate switch unit 25 as to disconnect the load 2 from the mains power line. The automatic deactivation procedure is started over again every time a key on the remote control unit is pressed. The visual signalling devices provided as part of the automatic mains switch device will be activated few seconds before switch unit 25 is activated, to warn the user that disconnection of the electric load is going to take place in a short time.

Additional functions can easily be implemented by appropriately programming the microprocessor in the logical control unit in order to accommodate specific applications requirements or in order to change the operational parameters and still remaining within the scopes and the principles described for the device subject of the present invention.

The invention has been here described with reference to one preferred form of implementation which has been shown as an example and not in any way as a restriction or limitation. Even if other realization solution are adopted they shall, in any case, be considered falling within the protection of the same invention, as better defined by the following claims.

## Claims

1. Automatic mains switch device (1)including;
- A switching unit (25) fit to disconnect a load (2) from the electric mains power;
- a receiver unit (4) capable of receiving the signals coming from a remote control unit (5);
- a logical control unit (23) for the control of the operation of device (1);
- a sensor unit (24), connected to the above said logical control unit (23), fit to generate a first logical signal when presence of electric load is detected, and to generate a second logical signal when no electric load is detected.

2. Automatic mains switch device (1) according to the claim 1, in which the above said sensor unit (24) includes an inductive element (L1).

3. Automatic mains switch device (1) according to the claim 2, in which the above said inductive element (L1) is capable of producing a magnetic field when crossed by an electric current.

4. Automatic mains switch device (1) according to the claim 3, in which the above said sensor (24) includes an electronic device (M1) based on Hall's effect, used to detect said magnetic field.

5. Automatic mains switch device (1) according to any one of the preceding claims, in which the output signal of said sensor (24) is supplied to the input of the said control unit (23).

6. Automatic mains switch device (1) according to the claim 5,in which said control unit (23) controls operation of said switch unit (25) according to the said first and second logical signals.

7. Automatic mains switch device (1) according to any one of the previous claims, including a power supply transformer (20), fit to isolate the switch device from the electric mains.

8. Automatic mains switch device (1) according to any one of the preceding claims, including a pushbutton (28) that, when activated, causes the logical control unit (23) to start automatic deactivation procedure.

9. Automatic mains switch device (1) according to claim 8, in which said control unit (23), following the execution of said automatic deactivation procedure, controls the switching unit (25) to disconnect the load (2) from the electric mains after a predetermined delay.

10. Automatic mains switch device (1) according to any one of the preceding claims, moreover including a signalling device (27), used to indicate the occurrence of a predetermined operational mode.

11. Automatic mains switch device (1) according to the claim 10, in which said signalling device (27) includes a LED, fit to emit a predetermined light sequences.

12. Automatic mains switch device (1) according to the claim 10 or 11, in which said signalling device (27) includes a buzzer fit to emit an acoustic signal.
